# EUROPÄISCHE PATENTSCHRIFT

(11) **EP 1 129 915 B1**
(45) Veröffentlichungstag und Bekanntmachung des Hinweises auf die Patenterteilung: **05.10.2005**
(21) Anmeldenummer: 00128399.3
(22) Anmeldetag: 22.12.2000
(51) Int. Cl.: B60T 1/087, B60T 10/02, F01P 3/20, F01P 7/14, F16D 57/00, F16D 65/78

(54) **Verfahren zur Verbesserung der Verfügbarkeit einer Antriebsmaschine und Steuer- und/ oder Regelvorrichtung**
Method for increasing the availability of a prime mover and control device
Procédé pour améliorer la disponibilité d'un moteur d'entraînement et dispositif de contrôle

(30) Priorität: 02.03.2000 DE 10009959
(43) Veröffentlichungstag der Anmeldung: 05.09.2001
(73) Patentinhaber: Voith Turbo GmbH & Co. KG, 89522 Heidenheim (DE)
(72) Erfinder: Dietzel, Bernd, 89428 Syrgenstein (DE); Becke, Martin, 89075 Ulm (DE); Nitsche, Martin, 89547 Gerstetten (DE)
(74) Vertreter: Dr. Weitzel & Partner

(56) Entgegenhaltungen:
- EP-A- 0 873 925
- WO-A-94/27845
- DE-A- 19 716 919
- US-A- 4 061 214
- US-A- 4 440 272

## Beschreibung

Die Erfindung betrifft ein Verfahren zur Verbesserung der Verfügbarkeit einer Antriebsmaschine in Antriebssträngen von Fahrzeugen mit einem Retarder, wobei die Kühlmittelkreisläufe der Antriebsmaschine und des Retarders wenigstens mittelbar miteinander thermisch gekoppelt sind, insbesondere ein Verfahren zum Schutz vor Überlastung der Antriebsmaschine im einzelnen mit den Merkmalen aus dem Oberbegriff des Anspruchs 1; ferner eine Steuer- und/oder Regelvorrichtung.

In Antriebssträngen von Fahrzeugen mit einem Retarder, vorzugsweise einem hydrodynamischen Retarder und einer Antriebsmaschine, bei welchem jeden der beiden ein separater Kühlmittelkreislauf zugeordnet ist und die Kühlmittelkreisläufe miteinander thermisch gekoppelt sind, wurde bisher zum Schutz der Verbrennungskraftmaschine vor Überhitzung die Temperatur am Austritt der Kühlmittelflüssigkeit im Kühlmittelkreislauf des hydrodynamischen Retarders, welche auch als sogenannte Kühlmittel- bzw. Wasserrücklauftemperatur bezeichnet wird, mit einer Einrichtung, beispielsweise in Form eines Sensors, erfaßt und entsprechend der Größe der Kühlmittel- bzw. Wasserrücklauftemperatur gegebenenfalls die Bremsleistung des hydrodynamischen Retarders reduziert, um eine übermäßige Abgabe der Verlustleistungen in Form von Wärmeenergie an den Kühlmittelkreislauf der Verbrennungskraftmaschine zu vermeiden. Dies bedingt jedoch, daß am Kühlmittelaustritt am hydrodynamischen Retarder eine entsprechende Einrichtung zur Erfassung der Kühlmitteltemperatur vorgesehen werden muß. Dabei ist zu berücksichtigen, daß jeder zusätzliche Sensor ein Bauelement darstellt, welches ausfallen kann, womit unter gewissen Umständen eine sichere Funktionsweise der Antriebsmaschine nicht mehr gewährleistet werden kann. Des weiteren ist das Vorsehen dieses Sensors mit entsprechenden Kosten verbunden.

Bekannt sind desweiteren Verfahren zur Steuerung der Bremswirkung eines Retarders, insbesondere der Begrenzung der Bremswirkung eines Retarders, bei dem die während des Bremsens erzeugte Wärme mit Hilfe eines Kühlmediums eines Kühlsystems abgeführt wird, um eine Überhitzung des Kühlmediums zu verhindern. Stellvertretend wird dabei auf die Druckschrift DE 197 16 919 A1 verwiesen. Bei diesem wird die Kühlleistung des Kühlkreislaufes des Retarders bestimmt und die Bremsleistung als Funktion der Kühlleistung des Kühlssystems eingestellt. Dabei kann es sich beim Kühlmittelkreislauf um dem Kühlmittelkreislauf der Verbrennungskraftmaschine handeln. Der Sollwert der Kühlleistung beziehungsweise die maximal zulässige Kühlleistung kann dabei von einer Reihe von Parametern abhängig sein. Zu berücksichtigende Parameter sind dabei zum Beispiel die Umgebungstemperatur, die Gehäusetemperatur, die Stellung des Thermostaten im Kühlmittelkreislauf, der Druck im Kühlmittelkreislauf, die Fahrzeuggeschwindigkeit, die Hinterachsübersetzung, die kapazitive Energieaufnahme der gesamten Kühlanlage, die Gangstellung, der Kupplungszustand etc. Die Kühlleistung wird dabei beispielsweise durch die Erfassung des Kühlmitteldurchsatzes bestimmt, wobei dieser wiederum mindestens durch die Aufnahme der Retarderbremsleistung aus Drehzahl und Bremsmoment sowie der Aufnahme der Temperaturdifferenz des Kühlmittels bestimmt wird. Dieses Verfahren dient dabei lediglich der Erhöhung der Retarderverfügbarkeit. Eine Berücksichtigung anderer Komponenten des Antriebssystems ist nicht vorgesehen.

Der Erfindung liegt daher die Aufgabe zugrunde, ein Verfahren sowie ein Steuer- und Regelsystem zur Verbesserung der Verfügbarkeit einer Antriebsmaschine, insbesondere zum Schutz der Antriebsmaschine vor Überhitzung und eine Steuer- bzw. Regelvorrichtung derart weiterzuentwickeln, daß die genannten Nachteile vermieden werden. Die konstruktive Ausführung soll sich dabei durch eine geringe Bauteilanzahl auszeichnen. Des weiteren ist der steuerungstechnische Aufwand möglichst gering zu halten.

Unter Verfügbarkeit wird dabei die Lebensdauer der Antriebsmaschine bzw. der Zeitraum bis zum Eintritt von Schädigungen verstanden.

Die erfindungsgemäße Lösung ist durch die Merkmale der Ansprüche 1 und 5 charakterisiert. Vorteilhafte Ausgestaltungen sind in den Unteransprüchen beschrieben.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung anhand eines Ausschnitts aus einem Antriebssystem mit thermisch gekoppelten Kühlmittelkreisläufen von Verbrennungskraftmaschinen und hydrodynamischen Retarder eine Möglichkeit der Anordnung des Temperatursensors zur Erfassung der Kühlmittelvorlauftemperatur und die Ausführung einer Vorrichtung zur Ermittlung der Kühlmittelrücklauftemperatur;
- Figur 2: verdeutlicht in schematisch vereinfachter Darstellung eine alternative Ausführung eines Kühlmittelsystems zur thermischen Koppelung der Kühlmittelkreisläufe von Verbrennungskraftmaschine und hydrodynamischen Retarder;
- Figur 3: verdeutlicht anhand einer Ausführung gemäß Figur 1 eine alternative Möglichkeit der Anordnung eines Temperatursensors;
- Figur 4: verdeutlicht anhand eines Blockschaltbildes die Funktionsweise der Steuervorrichtung zum Schutz der Antriebsmaschine vor Überhitzung.

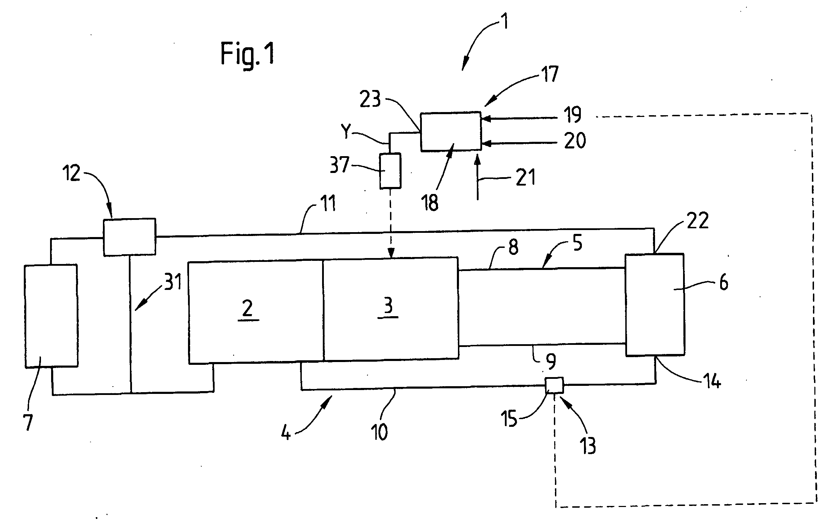

Die Figur 1 verdeutlicht in schematisch vereinfachter Darstellung anhand eines Ausschnittes aus einem Antriebssystem 1 für Fahrzeuge die thermische Kopplung der Kühlmittelkreisläufe einer Antriebsmaschine in Form einer Verbrennungskraftmaschine 2 und eines hydrodynamischen Retarders 3. Beiden ist jeweils ein separater Kühlmittelkreislauf zugeordnet. Der Kühlmittelkreislauf der Verbrennungskraftmaschine ist dabei mit 4 bezeichnet und der Kühlmittelkreislauf des Retarders mit 5. Die Kühlmittelkreisläufe 4 der Verbrennungskraftmaschine 2 und 5 des hydrodynamischen Retarders 3 sind über wenigstens einen Wärmetauscher 6 miteinander thermisch gekoppelt. Wenigstens einer der beiden Kühlmittelkreisläufe 4 oder 5, vorzugsweise der Kühlmittelkreislauf 4 der Verbrennungskraftmaschine 2 weist wenigstens eine Einrichtung zur Kühlung des Kühlmittels 7 auf. Die thermische Kopplung zwischen den Kühlmittelkreisläufen 4 der Verbrennungskraftmaschine und 5 des hydrodynamischen Retarders 3 über den Wärmetauscher 6 bedingt, daß bei Inbetriebnahme des hydrodynamischen Retarders 3, d.h. bei Erzeugung eines bestimmten definierten Bremsmomentes, welche zur Erhitzung des Betriebsmittels des hydrodynamischen Retarders 3 führt, die dabei entstehende Verlustleistung in Form von Wärme über den Kühlmittelkreislauf 5 an den Kühlmittelkreislauf 4 der Verbrennungskraftmaschine mittels dem Wärmetauscher 6 abgegeben werden kann. Die Kühlung des Kühlmittels im Kühlmittelkreislauf 5 des hydrodynamischen Retarders 3 erfolgt somit indirekt über die Einrichtung zur Kühlung des Kühlmittels im Kühlmittelkreislauf 4 der Verbrennungskraftmaschine 2. Der Kühlmittelkreislauf 5 des hydrodynamischen Retarders 3 umfaßt dabei wenigstens eine Rücklaufleitung 8 vom Retarder 3 zum Wärmetauscher und eine Zulaufleitung 9, welche das über dem Wärmetauscher indirekt gekühlte Kühlmittel dem hydrodynamischen Retarder 3 wieder zuführt. Der Kühlmittelkreislauf 4 der Verbrennungskraftmaschine 2 umfaßt ebenfalls wenigstens eine Zulaufleitung 10 von der Verbrennungskraftmaschine 2 zum Wärmetauscher 6 und eine Verbindungsleitung in Form einer Rücklaufleitung 11 vom Wärmetauscher 6 zur Verbrennungskraftmaschine 2. In der Verbindungsleitung 11 ist die Einrichtung zur Kühlung des Kühlmittels 7 integriert. Es sind Mittel 12 zur wahlweisen Inbetriebnahme der Einrichtung zur Kühlung des Kühlmittels 7 vorgesehen. Diese Mittel umfassen im dargestellten Fall einen Bypass 31, welcher ein Durchströmen des Kühlmittels im Kühlmittelkreislauf 4 der Verbrennungskraftmaschine 2 über die Einrichtung zur Kühlung des Kühlmittels 7 ermöglicht oder eine Umgehung der Einrichtung zur Kühlung des Kühlmittels 7. Zur Vermeidung der Überhitzung der Verbrennungskraftmaschine 2 bei Inbetriebnahme und während des Betriebes des hydrodynamischen Retarders 3 wird erfindungsgemäß die Rücklauftemperatur aus der Vorlauftemperatur des Kühlmittels im Kühlmittelkreislauf 5 des hydrodynamischen Retarders 3 ermittelt. Dies erfolgt mittels entsprechenden Erfassungseinrichtungen 13 zur Erfassung wenigstens einer, die Kühlmitteltemperatur im Retarderzulauf wenigstens mittelbar beschreibenden Größe. Bei der in der Figur 1 dargestellten Ausführung ist die Einrichtung 13 zur Erfassung wenigstens einer die Kühlmitteltemperatur in der Zulaufleitung 10 des Kühlmittelkreislaufes 4 wenigstens mittelbar charakterisierenden Größe 13 vor dem Eingang 14 des Wärmetauschers 6 angeordnet. Die Einrichtung zur Erfassung wenigstens einer, die Kühlmitteltemperatur in der Zulaufleitung 9 des hydrodynamischen Retarders wenigstens mittelbar charakterisierenden Größe umfaßt im dargestellten Fall dazu wenigstens einen Temperatursensor 15, in der Verbindungsleitung zwischen der Verbrennungskraftmaschine 2 und dem Wärmetauscher 6. Unter Berücksichtigung des Wärmeübergangs im Wärmetauscher ist die in der Zulaufleitung an der Verbrennungskraftmaschine 2 zum Wärmetauscher 6 ermittelte Kühlmitteltemperatur direkt proportional zu der in der Zulaufleitung 9 zum hydrodynamischen Retarder 3. Idealisiert sollte die in der Zulaufleitung 9 vorliegende Temperatur der Kühlmitteltemperatur 14 des Wärmetauschers 6 entsprechen.

Erfindungsgemäß wird aus der, die Kühlmitteltemperatur am Zulauf des Retarders wenigstens mittelbar charakterisierenden Größe, insbesondere der Vorlauftemperatur des hydrodynamischen Retarders die entsprechende Rücklauftemperatur, welche in der Verbindungsleitung zwischen dem Wärmetauscher und der Verbrennungskraftmaschine 2 im Kühlmittelkreislauf 4 der Verbrennungskraftmaschine 2 vorliegt, berechnet und entsprechend des Ergebnisses die Bremsleistung des hydrodynamischen Retarders gesteuert. Zu diesem Zweck ist eine entsprechende Steuervorrichtung 17 vorgesehen. Diese umfaßt wenigstens eine Steuervorrichtung 18, welche wenigstens zwei Eingänge, einen ersten Eingang 19 und einen zweiten Eingang 20 aufweist, wobei der erste Eingang 19 mit der Einrichtung zur Erfassung wenigstens einer die Kühlmitteltemperatur in der Zulaufleitung des hydrodynamischen Retarders 3 wenigstens mittelbar charakterisierenden Größe 13 verbunden ist. Über den zweiten Eingang 20 erfolgt die Zuführung eines Signales für den IstWert, einer der vom Retarder in das Kühlwasser eingebrachten Energie wenigstens mittelbar beschreibenden Größe. Über einen weiteren Eingang 21 wird ein Signal für eine, den Durchfluß des Kühlmittels im Kühlmittelkreislauf 5 des hydrodynamischen Retarders 3 wenigstens mittelbar charakterisierenden Größe zur Berechnung der Retarderrücklauftemperatur, d.h. insbesondere der Temperatur in der Ablaufleitung 8 bzw. am Ausgang 22 des Wärmetauschers 6 ermittelt. Die Größe der ermittelten Rücklauftemperatur bestimmt dabei die Stellgröße y, welche am Ausgang 23 der Steuereinrichtung 18 ausgegeben wird und welche der Ansteuerung einer Stelleinrichtung 37 zur Beeinflusssung der mittels des hydrodynamischen Retarders erzeugbaren Leistung dient.

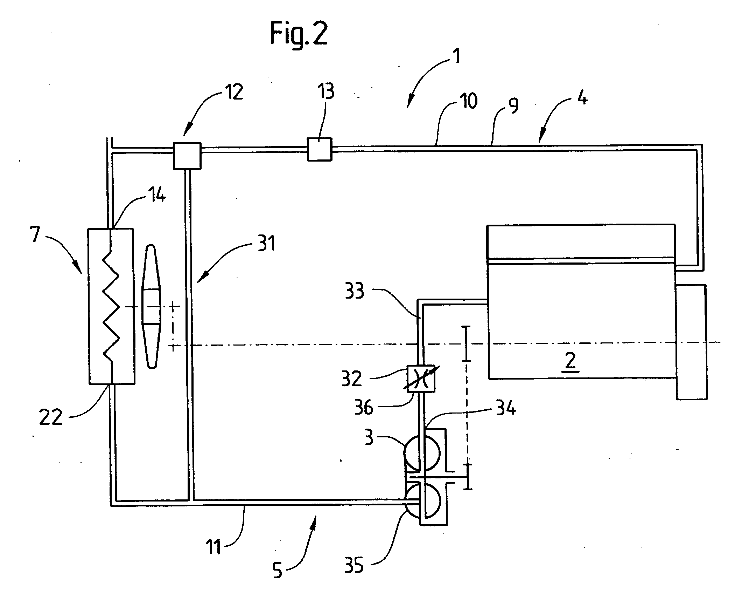

Eine für den Einsatz der erfindungsgemäßen Lösung alternative Ausführung der thermischen Kopplung der Kühlmittelkreislaufe der Verbrennungskraftmaschine 2 und des hydrodynamischen Retarders 3 ist beispielhaft in der Figur 2 dargestellt. Der hydrodynamische Retarder 3 ist hier im Kühlmittelkreislauf 4 der Verbrennungskraftmaschine 2 angeordnet und das Kühlmittel fungiert gleichzeitig als Betriebsmittel des Retarders 3 sowie als Kühlmittel dessen. Es sind Mittel 32 vorgesehen, welche im Traktionsbetrieb, d.h. im Nichtbremsbetrieb die Funktion des Retarders 3 als Umwälzpumpe für das Kühlmittel ermöglichen und im Bremsbetrieb die Erzeugung des Bremsmomentes. Die Mittel 32 sind in der Verbindungsleitung 33 zwischen Retarder 3 und Verbrennungskraftmaschine 2 angeordnet und erzeugen im Bremsbetrieb einen geringeren Durchströmquerschnitt am Auslauf 34 des Retarders und im Nichtbremsbetrieb einen wesentlich größeren Durchströmquerschnitt am Auslauf 34 gegenüber dem Zulauf 35 zum Retarder und umfassen vorzugseise wenigstens eine Ventileinrichtung 36. Die Anordnung der Kühleinrichtung 7 und der Einrichtung 13 zur Erfassung der Kühlmittelvorlauftemperatur, insbesondere des Temperatursensors, entspricht der in der Figur 1 beschriebenen. Für gleiche Elemente werden daher die gleichen Bezugszeichen verwendet und bezüglich der Beschreibung auf Figur 1 verwiesen.

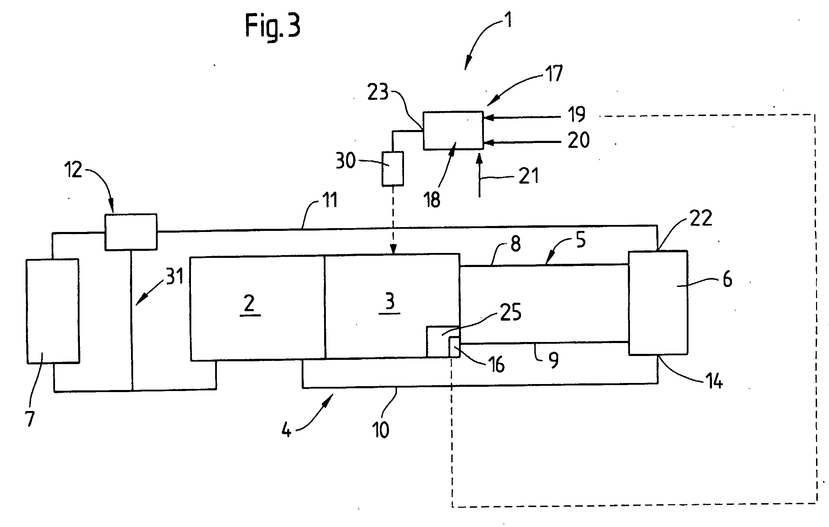

Figur 3 verdeutlicht anhand einer Kühlmittelkreislaufausführung gemäß Figur 1 in schematisch stark vereinfachter Darstellung eine weitere Anordnungsmöglichkeit der Einrichtung 13 zur Erfassung der Kühlmittelvorlauftemperatur. Diese besteht darin, für den Fall, daß der hydrodynamische Retarder 3 ein integriertes elektronisches Steuergerät aufweist, welches auf einer mit dem Kühlwasservorlauf verbundenen Trägerplatte wärmeleitend montiert ist, einen entsprechenden Temperatursensor 16 direkt auf der Elektronikplatte zu montieren, um dort die Kühlwasservorlauftemperatur des hydrodynamischen Retarders 3 zu messen.

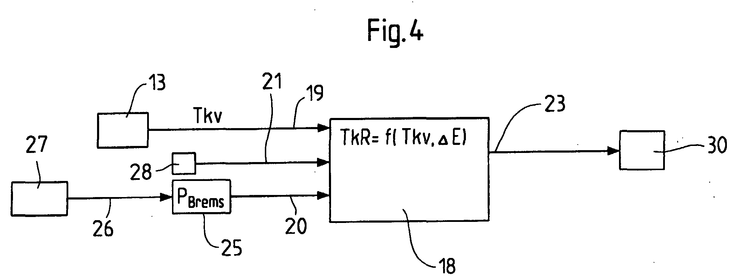

Die Funktionsweise der Steuervorrichtung 17 ist in der Figur 4 anhand eines Blockschaltbildes erläutert. Die Steuervorrichtung 17 umfaßt wie bereits ausgeführt eine Steuereinrichtung 18, welche wenigstens drei Eingangssignale verarbeitet. Diese können der Steuereinrichtung 18 entweder seriell oder parallel zugeführt werden. Im dargestellten Fall sind zum Zweck der parallen Signalzufuhr dazu wenigstens drei Eingänge vorgesehen - ein erster Eingang 19, ein zweiter Eingang 20 und ein dritter Eingang 21. Der erste Eingang 19 ist dabei mit einer Einrichtung zur Erfassung wenigstens einer, die Kühlmitteltemperatur in der Zulaufleitung 9 zum hydrodynamischen Retarder 3 wenigstens mittelbar charakterisierenden Größe wenigstens mittelbar gekoppelt. Bei dieser Einrichtung 13 kann es sich dabei um einen Sensor 15, welcher direkt am Eingang 14 des Wärmetauschers 6 im Kühlmittelkreislauf 4 angeordnet ist, handeln. Eine weitere Möglichkeit besteht darin, die Information über die Größe der Wasservorlauftemperatur, d.h. die Kühlmitteltemperaturen der Zulaufleitung 9 des hydrodynamischen Retarders 3 in einem Fahrzeugsystem mit sogenanntem CAN-Bus als Verbindungssystem für verschiedeneme Steuereinrichtungen abzurufen. Eine andere oder zusätzliche Möglichkeit besteht darin, für den Fall, daß der hydrodynamische Retarder ein integriertes elektronisches Steuergerät aufweist, welches auf einer mit dem Kühlwasservorlauf verbundenen Trägerplatte wärmeleitend montiert ist, einen entsprechenden Temperatursensor direkt auf der Elektronikplatte zu montieren, um dort die Kühlwasservorlauftemperatur des hydrodynamischen Retarders 3 zu messen.

Die Kühlmittelrücklauftemperatur vom hydrodynamischen Retarder 3 ergibt sich aus der Wasservorlauftemperatur, für die ein Signal am Eingang 19 der Steuereinrichtung 18 anliegt, und die vom hydrodynamischen Retarder in das Kühlmittel im Kühlmittelkreislauf 5 eingebrachten Energie. Diese bestimmt sich dabei unter anderem aus der erzeugten Bremsleistung P_{Brems}, welche am Eingang 20 als Signal der Steuereinrichtung 18 zuführbar ist. Die Retarderbremsleistung bestimmt sich dabei wenigstens aus einer, das Retardermoment M wenigstens mittelbar charakterisierenden Größe und der Geschwindigkeit des Fahrzeuges v. Das am Eingang 20 anliegende Signal für die Retarderbremsleistung an der Steuereinrichtung 18 kann dabei über eine Steuereinrichtung des hydrodynamischen Retarders 25 bestimmt werden. In der Steuereinrichtung 25 des hydrodynamischen Retarders können beispielsweise Kennlinien für das Retardermoment abgelegt sein, welche vom hydrodynamischen Retarder 3 eingesteuert werden und welche zur Ermittlung der Retarderbremsleistung verwendet werden können. Die Steuereinrichtung 25 des hydrodynamischen Retarders weist dazu wenigstens einen Ausgang auf, welcher mit dem Eingang 20 der Steuereinrichtung 18 verbunden ist. Zur Ermittlung des Bremsmomentes weist die Steuereinrichtung 25 beispielsweise einen weiteren Eingang 26 auf, welcher mit einer Einrichtung 27 zur wenigstens mittelbaren Erfassung einer die aktuelle Fahrgeschwindigkeit wenigstens mittelbaren charakterisierenden Größe gekoppelt ist. Bei der Einrichtung 27 kann es sich dabei beispielsweise um einen Sensor für die Ermittlung einzelner Drehzahlen handeln, wobei dabei unterschiedliche Drehzahlen berücksichtigt werden können, jedoch immer unter Berücksichtigung der im nachfolgenden Antriebssstrang noch vorgenommenen Drehzahl-/Drehmomentenwandlung. Des weiteren kann die Information über die, die aktuelle Fahrgeschwindigkeit wenigstens mittelbar charakterisierenden Größe, am Eingang 26 auch über eine andere Steuereinrichtung bereitgestellt werden, wobei über die Vemetzung mittels eines sogenannten CAN-Busses diese Information der Steuereinrichtung 25 zuführbar ist. Eine andere, hier nicht dargestellte Möglichkeit, besteht darin, die einzelnen Größen für die erzielte Bremsleistung P_{Brems} direkt an entsprechenden Eingängen der Steuereinrichtung 18 zuzuführen, wobei die Bremsleistung P_{Brems} von der Steuereinrichtung 18 ermittelt wird. Zur Ermittlung der in das Kühlmittel eingebrachten Energie im Kühlmittelkreislauf 4 der Verbrennungskraftmaschine wird des weiteren eine Größe zur wenigstens mittelbaren Beschreibung der Kühlwasserdurchflußmenge zur Berechnung benötigt. Diese Größe wird am dritten Eingang 21 der Steuereinrichtung 18 zugeführt. Da in der Regel die Kühlwasser-Durchflußmenge annähernd linear abhängig von der Drehzahl n der Verbrennungskraftmaschine ist, kann dieses Signal beispielsweise mittels einer Einrichtung zur Erfassung der Drehzahl der Verbrennungskraftmaschine 28 generiert werden, wobei die Drehzahl an der Steuereinrichtung 18 verarbeitet wird. Eine weitere Möglichkeit besteht darin, bereits am Eingang 21 ein Signal für eine Größe, welche die Durchflußmenge des Kühlmittels wenigstens mittelbar beschreibt, zuzuführen, wobei die Durchflußmenge bereits aus der Drehzahl der Verbrennungskraftmaschine ermittelt wurde.

Eine weitere Möglichkeit besteht auch darin, den Parameter der Drehzahl der Verbrennungskraftmaschine n als Information aus einem CAN-Bus zu erfassen, so daß sich dann aus der abgelegten Kennlinie die Durchflußmenge ergibt.

Über den Ausgang 23 der Steuereinrichtung wird dann wenigstens ein Stellsignal y zur Ansteuerung einer Einrichtung zur Änderung der Kühlmitteltemperatur im Kühlmittelkreislauf 4 durch Steuerung der Bremsleistung des hydrodynamischen Retarders ausgegeben, wobei es sich bei dieser Stelleinrichtung um die Einrichtung 30 handelt, welche beispielsweise als Druckventileinrichtung ausgeführt sein kann.

Die in den Figuren 1 bis 3 dargestellten Möglichkeiten, insbesondere auch der zur Erfassung der einzelnen, die Wasserrücklauftemperatur des hydrodynamischen Retarders wenigstens mittelbar beschreibenden Größen, erforderlichen zu ermittelten Größen stellen lediglich Beispiele dar, wobei das erfindungsgemäße Verfahren nicht auf diese Möglichkeit beschränkt ist. Entscheidend ist lediglich, daß in einem Antriebsstrang mit thermisch gekoppelten Kühlmittelkreisläufen von hydrodynamischem Retarder und Verbrennungskraftmaschine die Wasserrücklauftemperatur des hydrodynamischen Retarders aus der Wasservorlauftemperatur und der in das Kühlmittel des Kühlmittelkreislaufes des hydrodynamischen Retarders eingebrachten Energie ermittelt wird. Die Ermittlung der in das Kühlwasser eingebrachten Energie, welche der Größe der Verlustleistung in Form von Wärmeenergie entspricht, kann dabei über das Retardermoment und die Fahrzeuggeschwindigkeit erfaßt werden, wobei zusätzlich die Kühlwasserdurchflußmenge zu berücksichtigen ist. Die Erfassung dieser einzelnen Größen und deren Verknüpfung, insbesondere deren Verarbeitung in den einzelnen Steuereinrichtungen liegt dabei im Ermessen des zuständigen Fachmannes, da die einzelnen Größen vielfältig verarbeitet werden können bzw. entsprechend der Gegebenheiten bereits aus anderen Steuersystemen übemommen werden können.

### Bezugszeichenliste:

- 1: Antriebssystem
- 2: Verbrennungskraftmaschine
- 3: hydrodynamischer Retarder
- 4: Kühlmittelkreislauf der Verbrennungskraftmaschine
- 5: Kühlmittelkreislauf des hydrodynamischen Retarders
- 6: Wärmetauscher
- 7: Einrichtung zur Kühlung des Kühlmittels im Kühlmittelkreislauf der Verbrennungskraftmaschine
- 8: Rücklaufleitung
- 9: Zulaufleitung
- 10: Zulaufleitung
- 11: Verbindungsleitung
- 12: Mittel zur wahlweisen Inbetriebnahme der Einrichtung zur Kühlung des Kühlmittels 7
- 13: Einrichtung zur Erfassung wenigstens einer die Kühlmitteltemperatur in der Zulaufleitung des hydrodynamischen Retarders wenigstens mittelbar charakterisierenden Größe
- 14: Eingang des Wärmetauschers
- 15: Temperatursensor
- 16: Temperatursensor
- 17: Steuervorrichtung
- 18: Steuereinrichtung
- 19: erster Eingang
- 20: zweiter Eingang
- 21: dritter Eingang
- 22: Ausgang des Wärmetauschers
- 23: Ausgang der Steuereinrichtung
- 25: Steuereinrichtung des hydrodynamischen Retarders
- 26: Eingang des hydrodynamischen Retarders
- 27: Einrichtung zur Erfassung der aktuellen Fahrgeschwindigkeit
- 29: Ausgang der Steuereinrichtung
- 30: Stelleinrichtung
- 31: Bypass
- 32: Mittel
- 33: Verbindungsleitung
- 34: Ablauf
- 35: Zulauf
- 36: Ventileinrichtung
- 37: Stelleinrichtung Retarder

## Patentansprüche

1. Verfahren zur Verbesserung der Verfügbarkeit einer Antriebsmaschine (2), insbesondere zum Schutz einer Antriebsmaschine vor Überlastung in Antriebssystemen (1) mit einer Bremseinrichtung (3), insbesondere einem hydrodynamischen Retarder, wobei der Antriebsmaschine (2) und der Bremseinrichtung (3) jeweils ein Kühlmittelkreislauf (4, 5) zugeordnet ist und die Kühlmittelkreisläufe (4, 5) thermisch miteinander gekoppelt sind;
bei welchem die Bremsleistung der Bremseinrichtung (3) als Funktion der Kühlleistung des Kühlmittelkreislaufes (4) der Antriebsmaschine (2) steuer- und/oder regelbar ist, wobei die Steuer- und/oder Regelung in Abhängigkeit einer, die Rücklauftemperatur des Kühlmittels im Bereich des Austrittes aus der Bremseinrichtung (3) wenigstens mittelbar charakterisierenden Größe erfolgt;
**gekennzeichnet durch** die folgenden Merkmale:
die Rücklauftemperatur des Kühlmittels im Bereich des Austrittes aus der Bremseinrichtung (3) wird aus einer, die Vorlauftemperatur des Kühlmittels zur Bremseinrichtung wenigstens mittelbar charakterisierenden Größe und aus der während des Betriebes der Bremseinrichtung in die Kühlmittelflüssigkeit der Bremseinrichtung (3) eingebrachten Energie berechnet, wobei diese Energie aus einer, das Bremsmoment wenigstens mittelbar charakterisierenden Größe und einer die Kühlmittel-Durchflussmenge charakterisierenden Größe bestimmt wird und die Kühlmittel-Durchflussmenge aus einer in der Steuereinrichtung hinterlegten Kennlinie, welche die Abhängigkeit von der Drehzahl der Antriebsmaschine wiedergibt, entnommen wird.

2. Verfahren nach Anspruch 1, **dadurch gekennzeichnet, dass** die Vorlauftemperatur des Kühlmittels im Kühlmittelkreislauf (5) zur Bremseinrichtung (3) ermittelt wird und/oder einer, diese wenigstens mittelbar charakterisierenden Größe aus einem Kommunikationsnetzwerk im Antriebssystem (1) und/oder einer einer anderen Komponente zugeordneten Steuer- und/oder Regelvorrichtung entnommen wird.

3. Verfahren nach einem der Ansprüche 1 oder 2, **dadurch gekennzeichnet, dass** die in die Kühlmittelflüssigkeit des Kühlmittelkreislaufes (5) eingebrachte Energie aus der Differenz der zwischen dem Eingang der Bremseinrichtung (3) und dem Ausgang der Bremseinrichtung (3) vorliegenden Temperaturen des Kühlmittels ermittelt wird.

4. Verfahren nach Anspruch 3, **dadurch gekennzeichnet, daß** die Ermittlung der Temperaturdifferenz aus dem Bremsmoment und einer, die Fahrzeuggeschwindigkeit wenigstens mittelbar charakterisierenden Größe und der Kühlmitteldurchflußmenge im Kühlmittelkreislauf (5) der Bremseinrichtung (3) ermittelt wird.

5. Steuer- und/oder Regelsystem (17) für ein Antriebssystem (1) mit einer Antriebsmaschine (2) und wenigstens einer Bremseinrichtung (3), wobei der Antriebsmaschine (2) und der Bremseinrichtung (3) ein Kühlmittelkreislauf (4, 5) zugeordnet ist und diese wenigstens mittelbar miteinander thermisch gekoppelt sind zur Durchführung des Verfahrens
gemäß einem der Ansprüche 1 bis 4;
mit wenigstens einem Eingang (19, 20, 21) und einem Ausgang (23);
der Eingang ist mit Mitteln zur wenigstens mittelbaren Erfassung der Vorlauftemperatur im Kühlmittelkreislauf der Bremseinrichtung koppelbar;
der Ausgang ist mit einer Stelleinrichtung zur Steuerung des Bremsmomentes der Bremseinrichtung (3) koppelbar;
mit einer Berechnungseinrichtung zur Ermittlung der von der Bremseinrichtung (3) während des Betriebes in das Kühlmittel eingebrachten Energie,
wobei diese Energie aus einer, das Bremsmoment wenigstens mittelbar charakterisierenden Größe und einer die Kühlmittel-Durchflußmenge charakterisierenden Größe bestimmt wird und die Kuhlmittel-Durchflußmenge aus einer in der Steuereinrichtung hinterlegten Kennlinie, welche die Abhängigkeit von der Drehzahl der Antriebsmaschine wiedergibt, entnommen wird.

6. Vorrichtung nach Anspruch 5, **dadurch gekennzeichnet, dass** sie eine weitere Berechnungseinrichtung zur Berechnung der Wasservorlauftemperatur aufweist.

7. Vorrichtung nach einem der Ansprüche 5 oder 6, **dadurch gekennzeichnet, dass** der Eingang mit einem Datennetzwerk verbunden ist, über welches die nachfolgend genannten Größen bereitgestellt werden:
- Drehzahl der Antriebsmaschine
- Temperatur im Kühlmittelkreislauf der Antriebsmaschine.

## Claims

1. A method for improving the availability of an engine (2), especially for protecting an engine from overload in drive systems (1) with a braking device (3), especially a hydrodynamic retarder, with the engine (2) and the braking device (3) each being associated with a coolant circulation (4, 5), and the coolant circulations (4, 5) being coupled with each other in a thermal respect;
in which the braking power of the braking device (3) can be controlled and/or regulated as a function of the cooling capacity of the coolant circulation (4) of the engine (2), with the open-loop and/or closed-loop control occurring depending on a variable which at least indirectly characterizes the return temperature of the coolant in the region of the exit from the braking device (3);
**characterized by** the following features:
the return temperature of the coolant in the region of the exit from the braking device is calculated from a variable which characterizes at least indirectly the flow temperature of the coolant to the braking device and from the energy introduced during the operation of the braking device into the coolant liquid of the braking device (3), with said energy being determined from a variable characterizing the braking torque at least indirectly and from a variable characterizing the coolant flow rate, and the coolant flow rate is taken from a characteristic curve saved in the control device, which curve is representative of the dependence on the speed of the engine.

2. A method according to claim 1, **characterized in that** the flow temperature of the coolant in the coolant circulation (5) to the braking device (3) is determined and/or a variable which characterizes the same at least indirectly is taken from a communications network in the drive system (1) and/or an open-loop and/or closed-loop control apparatus associated with another component.

3. A method according to one of the claims 1 or 2, **characterized in that** the energy introduced into the coolant liquid of the coolant circulation (5) is determined from the difference of the temperatures of the coolant present between the input of the braking device (3) and the output of the braking device (3).

4. A method according to claim 3, **characterized in that** the determination of the temperature difference is determined from the braking torque and a variable characterizing at least indirectly the vehicle speed and the coolant flow rate in the coolant circulation (5) of the braking device (3).

5. An open-loop and/or closed-loop control system (17) for a drive system (1) with an engine (2) and at least one braking device (3), with the engine (2) and the braking device (3) being associated with a coolant circulation (4, 5) and the latter being thermally coupled with each other at least indirectly for performing the method according to one of the claims 1 to 4;
with at least one input (19, 20, 21) and one output (23);
the input can be coupled with means for the at least indirect detection of the flow temperature in the coolant circulation of the braking device;
the output can be coupled with an actuating device for controlling the braking torque of the braking device (3);
with a calculation device for determining the energy introduced by the braking device (3) into the coolant during operation, with said energy being determined from a variable characterizing the braking torque at least indirectly and a variable characterizing the coolant flow rate, and the coolant flow rate being taken from a characteristic curve stored in the control device, which curve is representative of the dependence on the speed of the engine.

6. An apparatus according to claim 5, **characterized in that** it comprises a further calculating device for calculating the water flow temperature.

7. An apparatus according to one of the claims 5 or 6, **characterized in that** the input is connected with a data network, through which the following variables are provided:
- speed of engine;
- temperature in the coolant circulation of the engine.

## Revendications

1. Procédé de perfectionnement de la disponibilité d'une machine d'entraînement (2), notamment destiné à protéger une machine d'entraînement contre les surcharges dans des systèmes d'entraînement (1) avec un dispositif de freinage (3), notamment avec un ralentisseur hydrodynamique, un circuit de refroidissement (4, 5) étant associé respectivement à la machine d'entraînement (2) et au dispositif de freinage (3), ces circuits de refroidissement (4, 5) étant couplés thermiquement ; selon lequel la puissance frein du dispositif de freinage (3) est commandable et/ou réglable en fonction de la performance du circuit de refroidissement (4) de la machine d'entraînement (2), la commande et/ou le réglage ayant lieu en fonction d'une grandeur caractérisant du moins indirectement la température du fluide caloporteur recirculé en sortie du dispositif de freinage (3) ;
**caractérisé par** les particularités suivantes :
la température du fluide caloporteur recirculé en sortie du dispositif de freinage (3) est calculée à partir d'une grandeur caractérisant du moins indirectement la température du fluide caloporteur acheminé vers le dispositif de freinage et à partir de l'énergie introduite dans le fluide caloporteur du dispositif de freinage (3) pendant le fonctionnement du dispositif de freinage, cette énergie étant déterminée à partir d'une grandeur caractérisant du moins indirectement le couple de freinage et d'une grandeur caractérisant le débit du fluide caloporteur et le débit du fluide caloporteur étant lu d'une courbe caractéristique stockée dans la commande et reproduisant la dépendance du régime de la machine d'entraînement.

2. Procédé selon la revendication 1, **caractérisé en ce que** l'on détermine la température du fluide caloporteur acheminé dans le circuit de refroidissement (5) vers le dispositif de freinage (3) et/ou qu'on la déduit à partir d'une grandeur caractérisant du moins indirectement cette température d'un réseau de communication dans le système d'entraînement (1) et/ou d'un dispositif de commande et/ou de réglage associé à un autre composant.

3. Procédé selon l'une quelconque des revendications 1 ou 2, **caractérisé en ce que** l'énergie introduite dans le liquide caloporteur du circuit de refroidissement (5) est déterminée à partir de la différence de température du fluide caloporteur en entrée du dispositif de freinage (3) et en sortie du dispositif de freinage (3).

4. Procédé selon la revendication 3, **caractérisé en ce que** la différence de température est déterminée à partir du couple de freinage et d'une grandeur caractérisant du moins indirectement la vitesse du véhicule et du débit de fluide caloporteur dans le circuit de refroidissement (5) du dispositif de freinage (3).

5. Système de commande et/ou de réglage (17) pour un système d'entraînement (1) avec une machine d'entraînement (2) et au moins un dispositif de freinage (3), un circuit de refroidissement (4, 5) étant associé à la machine d'entraînement (2) et au dispositif de freinage (3), ceux-ci étant du moins indirectement couplés thermiquement, ce système étant destiné à mettre en oeuvre le procédé selon l'une quelconque des revendications 1 à 4;
avec au moins une entrée (19, 20, 21) et une sortie (23) ;
l'entrée est couplable à des moyens destinés à déterminer du moins indirectement la température du fluide caloporteur acheminé dans le circuit de refroidissement du dispositif de freinage (3) ;
la sortie est couplable à un dispositif de réglage destiné à commander le couple de freinage du dispositif de freinage (3) ;
avec un dispositif de calcul permettant de calculer l'énergie introduite dans le fluide caloporteur par le dispositif de freinage (3) pendant le fonctionnement, cette énergie étant déterminée à partir d'une grandeur caractérisant du moins indirectement le couple de freinage et d'une grandeur caractérisant le débit du fluide caloporteur et le débit du fluide caloporteur étant lu d'une courbe caractéristique stockée dans la commande et reproduisant la dépendance du régime de la machine d'entraînement.

6. Dispositif selon la revendication 5, **caractérisé en ce qu'**il comporte un autre dispositif de calcul destiné à calculer la température de l'eau acheminée.

7. Dispositif selon l'une quelconque des revendications 5 ou 6, **caractérisé en ce que** l'entrée est reliée à un réseau de données fournissant les grandeurs mentionnées ci-dessous :
- le régime de la machine d'entraînement
- la température dans le circuit de refroidissement de la machine d'entraînement.
